# EUROPÄISCHE PATENTSCHRIFT

(11) **EP 1 526 493 B1**
(45) Veröffentlichungstag und Bekanntmachung des Hinweises auf die Patenterteilung: **05.07.2006**
(21) Anmeldenummer: 04024478.2
(22) Anmeldetag: 14.10.2004
(51) Int. Cl.: G08G 1/01

(54) **Verfahren zur fahrzeugseitigen Verkehrsinformationsanzeige**
Method for display of traffic information in a vehicle
Procédé pour affichage de l'information routière dans un véhicule

(30) Priorität: 22.10.2003 DE 10349179
(43) Veröffentlichungstag der Anmeldung: 27.04.2005
(73) Patentinhaber: DaimlerChrysler AG, 70567 Stuttgart (DE)
(72) Erfinder: Haug, Andreas, 73730 Esslingen (DE); Herrtwich, Ralf, Dr., 14532 Kleinmachnow (DE); Kerner, Boris, Prof. Dr., 70619 Stuttgart (DE)

(56) Entgegenhaltungen:
- DE-A1- 10 036 792
- DE-A1- 10 119 730
- DE-A1- 19 951 546

## Beschreibung

Die Erfindung bezieht sich auf ein Verfahren zur fahrzeugseitigen Anzeige von Verkehrsinformationen, bei dem selbige fahrzeugseitig ermittelt und/oder fahrzeugextern ermittelt und zum Fahrzeug übertragen werden und fahrzeugseitig angezeigt werden.

Verfahren dieser Art sind in verschiedenen Ausprägungen bekannt, insbesondere für Straßenfahrzeuge. In der Offenlegungsschrift DE 100 37 827 A1 ist ein Verfahren offenbart, bei dem auf der Basis einer digitalen Straßennetzkarte ortsaufgelöst Lage und Ausdehnung prognostizierter Staubereiche angezeigt werden. Unter dem Begriff "ortsaufgelöst" soll dabei hier und im folgenden die Angabe verstanden werden, an welcher Stelle des betrachteten Verkehrswegenetzes sich der Stau bzw. ein anderes anzuzeigendes, verkehrliches Objekt befindet. Zusätzlich können prognostizierte Reisezeiten in Form zeitlicher Äquidistanzlinien bzw. -zonen, die voraussichtliche Ankunftszeit an bestimmten Streckenpunkten und/oder die Wahrscheinlichkeit angezeigt werden, mit der die Prognose das Auftreten des betreffenden Staus annimmt. Weiter können bei Angabe eines Zielortes eine ermittelte optimale Route und bei Bedarf zusätzlich eine oder mehrere ermittelte Alternativrouten zusammen mit zugehörigen Ankunftszeiten bzw. Verlustzeiten der Alternativrouten gegenüber der optimalen Route angezeigt werden.

Zur Beschreibung des Verkehrszustands ist es bekannt geworden, diesen in verschiedene Zustandsphasen zu klassifizieren, außer der Phase "freier Verkehr" insbesondere die Zustandsphasen "synchronisierter Verkehr", "gestauchter synchronisierter Verkehr" (sogenannte "pinch region") und "sich bewegende breite Staus", wobei die Dynamik des Verkehrsablaufs insbesondere auf Schnellstraßennetzen wesentlich durch das individuelle Verhalten dieser verkehrlichen Objekte und durch Phasenübergänge zwischen diesen verschiedenen Verkehrszustandsphasen geprägt wird. Dabei bilden sich an sogenannten effektiven Engstellen bei entsprechendem Verkehrsaufkommen typische Muster dichten Verkehrs. In verschiedenen früheren Patentanmeldungen der Anmelderin zu dieser Thematik sind die Definition und Charakteristika solcher effektiver Engstellen und der sich stromaufwärts davon bildenden Muster dichten Verkehrs sowie geeignete Verfahren zur Bestimmung, Überwachung und/oder Prognose des Verkehrszustands unter Berücksichtigung solcher Muster dichten Verkehrs stromaufwärts von effektiven Engstellen beschrieben, worauf für weitere Details verwiesen werden kann. Stellvertretend seien hier die Offenlegungsschriften DE 199 44 075 A1 und DE 100 36 789 A1 und die dort genannte Literatur erwähnt.

Die Berücksichtigung solcher effektiver Engstellen und der dort gegebenenfalls entstehenden Muster dichten Verkehrs ermöglicht gegenüber einer bloßen Berücksichtigung von Staubereichen eine deutlich verbesserte Genauigkeit und Zuverlässigkeit von Verkehrsprognosen. Analoge Verkehrsstörungsobjekte treten in Verkehrsnetzen von Ballungsräumen, bei denen das Verkehrsgeschehen von verkehrsgeregelten Netzknoten dominiert wird, in Form von sich stromaufwärts solcher verkehrsgeregelter Netzknoten bildenden Warteschlangen-Verkehrsmuster auf, die in entsprechenden Verkehrsprognosen adäquat berücksichtigt werden können, siehe hierzu für weitere Details z.B. die Offenlegungsschriften DE 199 40 957 A1 und DE 100 36 792 A1 und die dort genannte Literatur. In solchen Ballungsraum-Verkehrsnetzen ist die Verkehrsdynamik typischerweise durch die Verkehrsregelungsmaßnahmen an den Netzknoten, wie durch Lichtsignalanlagen an Straßenkreuzungen, dominiert, d.h. die verkehrsgeregelten Netzknoten bilden effektive Engstellen, an denen bei entsprechendem Verkehrsaufkommen Wartschlangen-Verkehrsmuster entstehen, nachfolgend auch einfach als Warteschlangen bezeichnet.

Ein in der Offenlegungsschrift DE 101 19 730 A1 offenbartes gattungsgemäßes Verfahren eignet sich besonders zur Anzeige von ermittelten effektiven Engstellen und/oder zugehörigen, ermittelten Mustern dichten Verkehrs eines Schnellstraßennetzes. Diese werden ortsaufgelöst auf einem Bildschirm angezeigt, vorzugsweise auf einer digitalen Wegenetzkarte und/oder in einer Fahrstrecken-Profildarstellung und/oder einer Reisezeit-Profildarstellung fahrtrichtungsselektiv. Zusätzlich können Detailinformationen über die ermittelten Muster dichten Verkehrs angezeigt werden, insbesondere relevante Prognoseinformationen wie Wahrscheinlichkeit der Entstehung, Fahrzeugankunftszeitpunkt, Ausfahrzeitpunkt, Verweildauer, Ausdehnung, Verkehrsdichte auf der jeweiligen Fahrspur, mittlere Fahrzeuggeschwindigkeit, Entstehungszeitpunkt, Auflösungszeitpunkt, Reisezeitverlust und/oder innere Struktur. In Ballungsräumen spielen die dynamischen Effekte der Entstehung und Entwicklung solcher Muster dichten Verkehrs aus den Zustandsphasen freier Verkehr, synchronisierter Verkehr, gestauchter synchronisierter Verkehr und sich bewegende breite Staus kaum eine Rolle, hier wird der Verkehrszustand von der andersartigen Dynamik der erwähnten Warteschlangen-Verkehrsmuster beherrscht.

Der Erfindung liegt als technisches Problem die Bereitstellung eines Verfahrens der eingangs genannten Art zugrunde, durch das Fahrzeuginsassen und insbesondere der Fahrzeugführer anschaulich, zuverlässig und genau über den für die weitere Fahrt relevanten Verkehrszustand insbesondere auch in Ballungsraumgebieten informiert werden, in denen das Verkehrsgeschehen von der Dynamik von Warteschlangen-Verkehrsmustern dominiert ist.

Die Erfindung löst dieses Problem durch die Bereitstellung eines Verkehrsinformationsanzeigeverfahrens mit den Merkmalen des Anspruchs 1. Bei diesem Verfahren werden als anzuzeigende Verkehrsinformationen mindestens effektive Ballungsraum-Engstellen und zugehörige aktuelle und/oder zukünftig zu erwartende Warteschlangen-Verkehrsmuster ermittelt und ortsaufgelöst, d.h. unter Angabe ihrer Lage auf dem zugrundeliegenden Ballungsraum-Verkehrswegenetz, angezeigt. Die Berücksichtigung der effektiven Ballungsraum-Engstellen, wie sie insbesondere von Lichtsignalanlagen an Kreuzungsbereichen und von Ballungsraum-Baustellen gebildet werden, verbessert signifikant die Qualität der dem Fahrzeugführer angezeigten Verkehrsstörungsinformationen in Ballungsräumen und erlaubt zudem eine deutlich verbesserte Genauigkeit und Zuverlässigkeit weiterer, für den Fahrzeugführer relevanter Verkehrsinformationen, wie z.B. Informationen über optimale Fahrtrouten und voraussichtliche Reisezeiten in Ballungsraumgebieten.

Bei einem nach Anspruch 2 weitergebildeten Verfahren erfolgt das Anzeigen von effektiven Ballungsraum-Engstellen bzw. Warteschlangen-Verkehrsmustern fahrtrichtungsselektiv nur in der möglichen Fahrtrichtung des Fahrzeugs, so dass der Fahrzeugführer nicht mit der Anzeige von für ihn irrelevanten Informationen z.B. über die Verkehrslage auf Gegenfahrbahnabschnitten belastet wird.

In einer Weiterbildung der Erfindung nach Anspruch 3 werden die effektiven Ballungsraum-Engstellen mit eventuellen zugehörigen Warteschlangen auf einer digitalen Wegenetzkarte symbolisch angezeigt. Das durch Symbole bewirkte Anzeigen von effektiven Ballungsraum-Engstellen ist für den Nutzer übersichtlich. Zusätzlich können je nach Bedarf zugehörige Detailinformationen in gewünschter Art und Anzahl angezeigt werden, sei es automatisch mit der Symbolanzeige der Ballungsraum-Engstellen oder nur auf Nutzeranforderung hin.

In weiterer Ausgestaltung der Erfindung können gemäß Anspruch 4 als Detailinformationen z.B. die Wahrscheinlichkeit der Entstehung von Warteschlangen, der voraussichtliche Fahrzeugankunftszeitpunkt, die Länge und prognostizierte Zeitpunkte des Auftretens und der Auflösung von Warteschlangen, ein warteschlangenbedingter Reisezeitverlust bzw. die voraussichtliche Wartezeit und/oder die Anzahl von Freiphasenzyklen, während denen der Verkehr an z.B. durch Lichtsignalanlagen verkehrsgeregelten Netzknoten jeweils freigegeben ist, angezeigt werden. Derartige Detailinformationen geben dem Fahrzeugführer je nach Bedarf einen genaueren Eindruck über die zu erwartende Verkehrslage.

In einer Weiterbildung der Erfindung nach Anspruch 5 werden die Warteschlangen in ihrer Längenausdehnung zusammen mit der zugehörigen Anzahl von abzuwartenden Freiphasen und/oder der zugehörigen Wartezeit dargestellt. Dies gibt dem Nutzer ein detailliertes Bild von der betreffenden Warteschlange.

Ein nach Anspruch 6 weitergebildetes Verfahren umfasst das Anzeigen einer ermittelten optimalen Fahrtroute und einer oder mehrerer Alternativrouten zusammen mit zugehörigen prognostizierten Reisezeitinformationen. Der Fahrzeugführer wird auf diese Weise sehr komfortabel über günstige Routen informiert.

Ein nach Anspruch 7 weitergebildetes Verfahren umfasst zusätzlich zur Ermittlung und Anzeige der effektiven Ballungsraum-Engstellen und zugehörigen Warteschlangen das Ermitteln und Anzeigen effektiver Schnellstraßennetz-Engstellen und zugehöriger Muster dichten Verkehrs. Dies gibt dem Fahrzeugführer zuverlässige und komfortable Verkehrsinformationen speziell auch dann, wenn er Gebiete mit sowohl Schnellstraßenals auch Ballungsraum-Streckenabschnitten befährt.

Vorteilhafte Ausführungsbeispiele der Erfindung sind in den Zeichnungen dargestellt und werden nachfolgend beschrieben. Hierbei zeigen:
- Fig. 1: eine Bildschirmdarstellung einer digitalen Straßenkarte mit fahrtrichtungsselektiver Anzeige von effektiven Ballungsraum-Engstellen mit zugehörigen Warteschlangen und Informationen über deren Ereigniswahrscheinlichkeit und Antreffzeitpunkt,
- Fig. 2: eine Darstellung entsprechend Fig. 1, jedoch mit zusätzlichen Reisezeit-Äquidistanzzonen,
- Fig. 3: eine Darstellung entsprechend Fig. 1, jedoch mit zusätzlicher Angabe der Anzahl von abzuwartenden Verkehrsregelungs-Freiphasen,
- Fig. 4: eine Darstellung entsprechend Fig. 1, jedoch mit zusätzlicher Angabe der voraussichtlichen Wartezeit in der Warteschlange,
- Fig. 5: eine Darstellung entsprechend Fig. 1, jedoch mit zusätzlichen Ankunftszeitangaben auch an warteschlangenfreien Wegenetzknoten,
- Fig. 6: eine Darstellung entsprechend Fig. 1, jedoch mit zusätzlicher Darstellung einer prognostizierten optimalen Fahrtroute und von Alternativrouten mit zugehörigen Reisezeitinformationen,
- Fig. 7: eine Streckenachsendarstellung für eine ermittelte Route,
- Fig. 8: eine Zeitachsendarstellung für die ermittelte Route von Fig. 7,
- Fig. 9: eine detaillierte Darstellung der Ausdehnung einer Warteschlange mit zugehörigen Freiphasen bzw. Wartezyklen,
- Fig. 10: eine diagrammatische Detaildarstellung einer prognostizierten Warteschlange und Fahrlinie auf Basis einer Durchschnittsgeschwindigkeit,
- Fig. 11: eine diagrammatische Darstellung entsprechend Fig. 10, jedoch mit prognostiziertem tatsächlichem Fahrzeugbewegungsverlauf in der Warteschlange, und
- Fig. 12: eine Bildschirmdarstellung einer digitalen Straßenkarte in einem Gebiet mit Ballungsraumbereich und Schnellstraßenbereich mit fahrtrichtungsselektiver Anzeige von effektiven Ballungsraum- und Schnellstraßen-Engstellen.

Die Figuren veranschaulichen beispielhafte Verkehrsinformationsanzeigen auf einem fahrzeugseitigen Bildschirm, wie sie von verschiedenen vorteilhaften Realisierungen des erfindungsgemäßen Verfahrens zur fahrzeugseitigen Verkehrsinformationsanzeige bereitgestellt werden. Charakteristischer Bestandteil der verschiedenen Verfahrensrealisierungen ist jeweils, dass die angezeigten Verkehrsinformationen neben eventuellen weiteren, herkömmlichen Verkehrsinformationen insbesondere Informationen über die Existenz von effektiven Ballungsraum-Engstellen und deren Lage auf dem betrachteten Wegenetz sowie Informationen über etwaige Warteschlangen-Verkehrsmuster, vorliegend auch kurz als Warteschlangen bezeichnet, enthalten, die sich stromaufwärts von solchen effektiven Ballungsraum-Engstellen bilden können. Zwar wird für die gezeigten Beispiele ein Straßennetz betrachtet, alternativ eignet sich das erfindungsgemäße Verfahren jedoch auch für einen anderen Wegenetztyp mit entsprechenden Verkehrseigenschaften, z.B. ein Schienennetz. Bei den durch die unterschiedlichen Figuren repräsentierten Beispielen kann es sich je nach Anwendungsfall um solche unterschiedlichen Verfahrensrealisierungen handeln, oder es können mehrere dieser Beispiele Bestandteil einer gemeinsamen Verfahrensrealisierung sein, die dann eine Umschaltmöglichkeit zwischen diesen verschiedenen Arten der Verkehrsinformationsanzeige auf dem Bildschirm aufweist.

Die dem vorliegenden Verkehrsinformationsanzeigeverfahren zugrundeliegenden Mittel und Methoden zur Erfassung des aktuellen und/oder prognostizierten, anzuzeigenden Verkehrszustands sind z.B. in diesbezüglichen früheren Patentanmeldungen der Anmelderin eingehend beschrieben, siehe auch die eingangs zitierten Druckschriften und die dort zitierte weitere Literatur, so dass darauf verwiesen werden kann und dies keiner weiteren Erläuterung bedarf. Insbesondere können geeignete Mittel und Methoden zur Bestimmung der Lage effektiver Engstellen in Ballungsraumnetzen und optional auch in Schnellstraßennetzen und zur Bestimmung von dort auftretenden Warteschlangen bzw. Mustern dichten Verkehrs für das vorliegende Verfahren vorausgesetzt werden. Dies können, wie dem Fachmann geläufig, sowohl fahrzeugautonom arbeitende Systeme, mit Fahrzeug-Fahrzeug-Kommunikation arbeitende Systeme und/oder mit einer Verkehrszentrale arbeitende Systeme zur Ermittlung des aktuellen und/oder Prognose des zukünftigen Verkehrszustands auf einem interessierenden Wegenetzbereich sein, die vor allem auch die Erfassung von individualisierbaren Verkehrsstörungsobjekten ermöglichen, wie effektiven Ballungsraum-Engstellen, insbesondere lichtsignalanlagengeregelte Netzknoten, und vor solchen gebildete Warteschlangen sowie von sich bewegenden breiten Staus, synchronisiertem Verkehr und gestauchtem synchronisiertem Verkehr und aus solchen Verkehrszustandsphasen aufgebauten Mustern dichten Verkehrs vor effektiven Engstellen in Schnellstraßennetzgebieten.

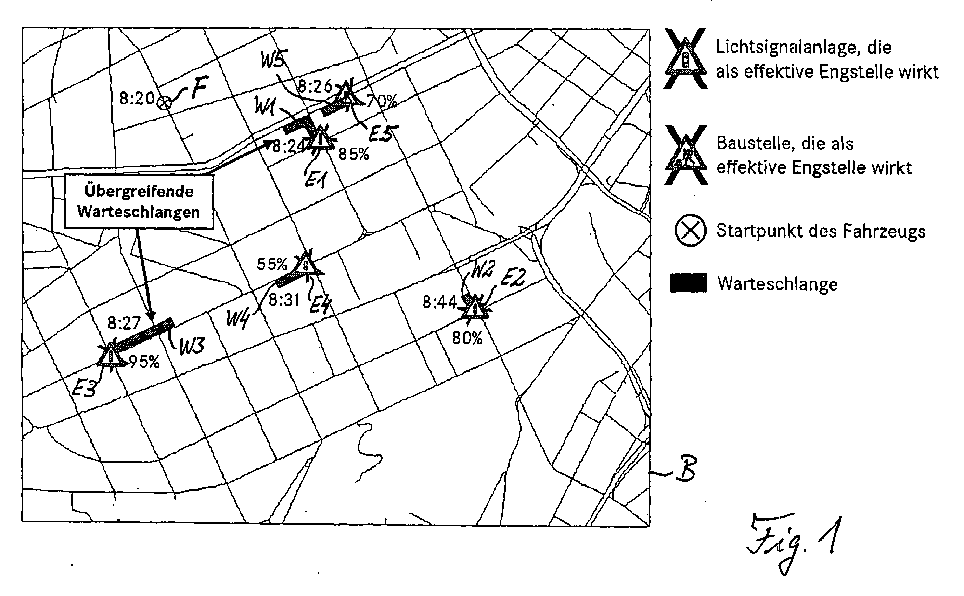

Fig. 1 veranschaulicht als eine Grundform ein Verfahrensbeispiel, bei dem auf der Basis einer digitalen Straßenkarte ausgehend vom jeweils momentanen Fahrzeugort als Startpunkt ermittelt und angezeigt wird, ob und wenn ja wo sich spezifisch für die möglichen Fahrtrichtungen eines betrachteten Fahrzeugs F effektive Ballungsraum-Engstellen innerhalb eines den Fahrzeugstandort enthaltenden Ballungsraum-Wegenetzbereiches befinden, auf die das Fahrzeug F bei seiner weiteren Fahrt je nach gewählter Fahrtrichtung treffen könnte. Solche effektiven Ballungsraum-Engstellen sind insbesondere durch Lichtsignalanlagen an Netzknoten, d.h. Straßenkreuzungsbereichen, und durch Baustellen gebildet. Im Beispiel von Fig. 1 sind dies vier Lichtsignalanlagen-Engstellen E1 bis E4 und eine Baustellen-Engstelle E5. Die Engstellen E1 bis E5 werden symbolisch als Kreuze in Verbindung mit einer intuitiven Verkehrsschilddarstellung am entsprechenden Streckenpunkt der digitalen Straßenkarte auf einem Bildschirm B im Fahrzeug F angezeigt. Dies ermöglicht es dem Fahrzeugführer, darauf bei Bedarf rechtzeitig zu reagieren.

Hierzu trägt die zusätzliche Darstellung von Detailinformationen für jede Engstelle E1 bis E5 bei. So werden im Beispiel von Fig. 1 Warteschlangen W1 bis W5 angezeigt, die für denjenigen Zeitpunkt an der zugehörigen Engstelle E1 bis E5 prognostiziert werden, zu dem das Fahrzeug F aufgrund der Resultate der durchgeführten Verkehrsprognose dort voraussichtlich ankommt und auf die es dann trifft. Die Anzeige der Warteschlangen W1 bis W5 erfolgt durch Balken mit einer der prognostizierten Warteschlangenlänge entsprechenden Länge. Es kann sich dabei auch um sogenannte übergreifende Warteschlangen, wie im Fall der Warteschlangen W1 und W3 handeln, die sich stromaufwärts über einen oder mehrere Netzknoten hinaus erstrecken. Zu jeder Warteschlange W1 bis W5 sind außerdem die zugehörige Prognosewahrscheinlichkeit ihres Auftretens in Prozent und der voraussichtliche Ankunftszeitpunkt angegeben.

Es versteht sich, dass in alternativen Ausführungsformen mehr oder weniger solche Detailinformationen über prognostizierte Ballungsraum-Warteschlangen angezeigt werden können, und zwar alternativ automatisch oder nur auf eine spezielle Nutzeranforderung hin, z.B. durch entsprechende Betätigung von Bedienelementen für den Bildschirm B durch einen Fahrzeuginsassen. So können je nach Bedarf nur die ermittelten Ballungsraum-Engstellen durch ihre entsprechenden Symbole auf der digitalen Straßenkarte oder nur diese zusammen mit den Warteschlangenbalken oder zusätzlich auch Ballungsraum-Engstellen auf Gegenrichtungsfahrbahnen mit oder ohne zugehörige Warteschlangen und zu diesen gehörende Detailinformationen dargestellt werden.

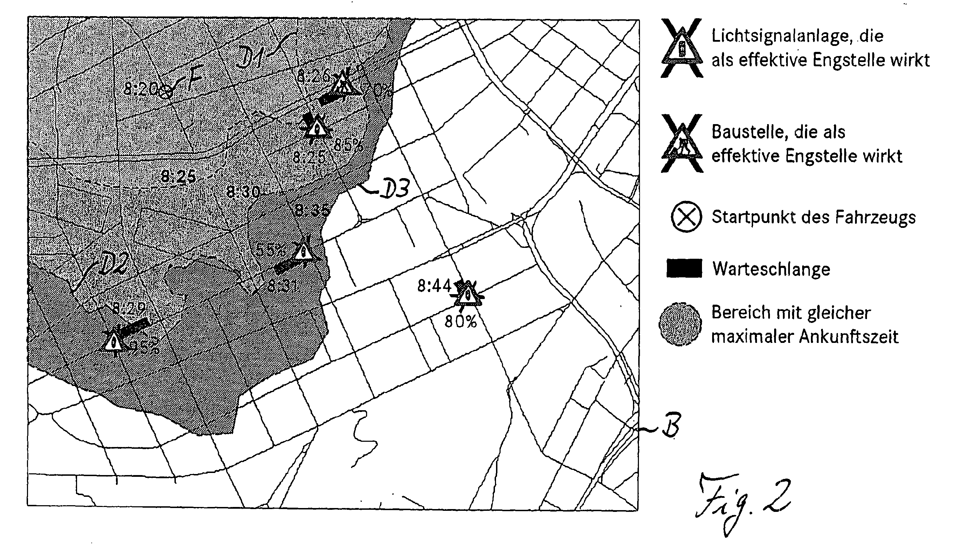

Fig. 2 zeigt eine Darstellungsvariante, bei der zusätzlich zu den Informationen von Fig. 1 Reisezeit-Äquidistanzzonen wiedergegeben werden, d.h. das Fahrzeug F kann an jede Stelle der betreffenden Zone mit voraussichtlich gleicher maximaler Ankunftszeit auf der Grundlage der prognostizierten Verkehrslage gelangen. Zu den zonenbegrenzenden Äquidistanzlinien ist die prognostizierte Ankunftszeit angegeben. Im Beispiel von Fig. 2 sind drei Äquidistanzlinien D1, D2, D3 explizit wiedergegeben, zu denen ein prognostizierter Reisezeitabstand von jeweils 5 Minuten gehört.

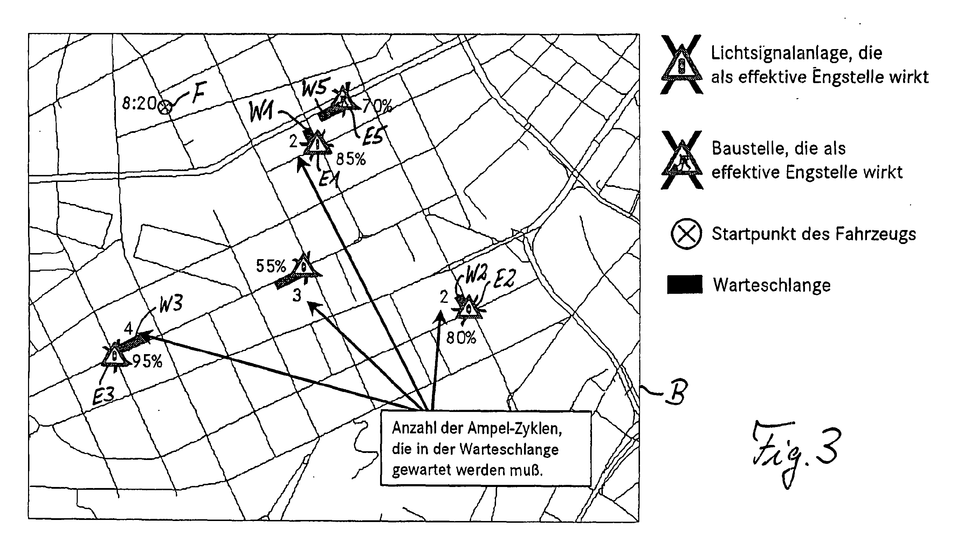

Im Beispiel von Fig. 3 wird zusätzlich zu den Symbolen der ermittelten Ballungsraum-Engstellen, den Warteschlangenbalken und prognostizierten Ereigniswahrscheinlichkeiten die Anzahl an Freiphasen angezeigt, die voraussichtlich bei Ankommen an der betreffenden Warteschlange dort abgewartet werden müssen, bis die zugehörige Engstelle passiert werden kann. Speziell handelt es sich bei Lichtsignalanlagen um die Anzahl an entsprechenden Grünphasen, vorliegend auch Ampel-Zyklen bezeichnet. Dies gibt dem Nutzer einen weiteren Hinweis über die Stärke der Warteschlangen-Verkehrsstörung.

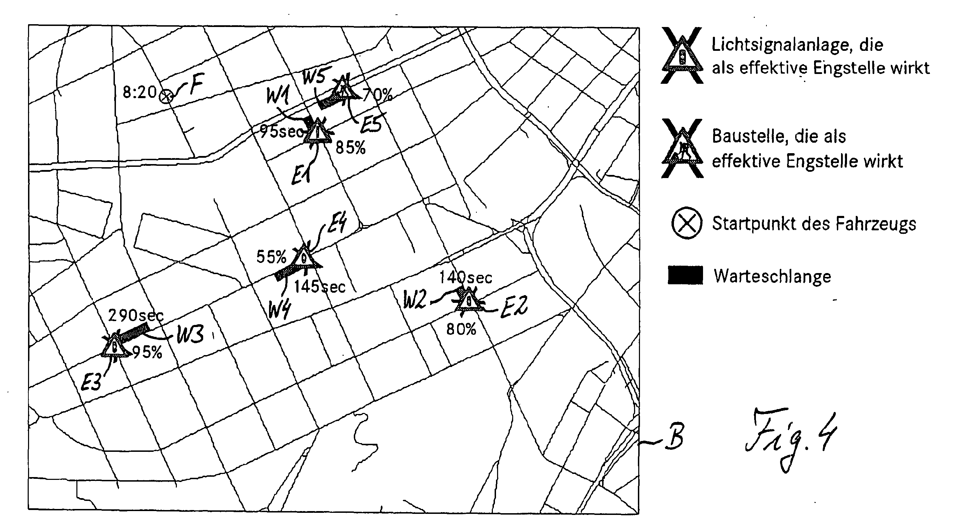

Fig. 4 zeigt eine Variante von Fig. 3, bei der statt der Anzahl von Ampel-Zyklen für jede prognostizierte Warteschlange W1 bis W5 die voraussichtliche Wartezeit in Sekunden angegeben ist, die das Fahrzeug F zum Passieren der Warteschlange W1 bis W5 benötigt.

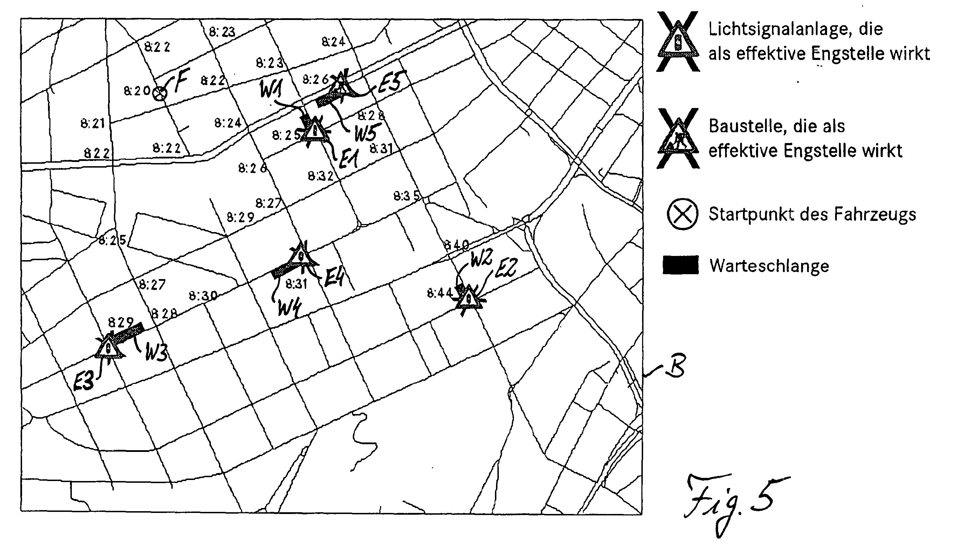

Fig. 5 zeigt ein Verfahrensbeispiel, bei dem aus der Verkehrsprognose zusätzlich zu den Symbolen der ermittelten Ballungsraum-Engstellen E1 bis E5 und den Längsbalken der zugehörigen prognostizierten Warteschlangen W1 bis W5 prognostizierte Ankunftszeitpunkte als Uhrzeiten für die Ballungsraum-Engstellen und für Netzknoten angegeben werden, zu denen das Fahrzeug F eventuell fahren könnte.

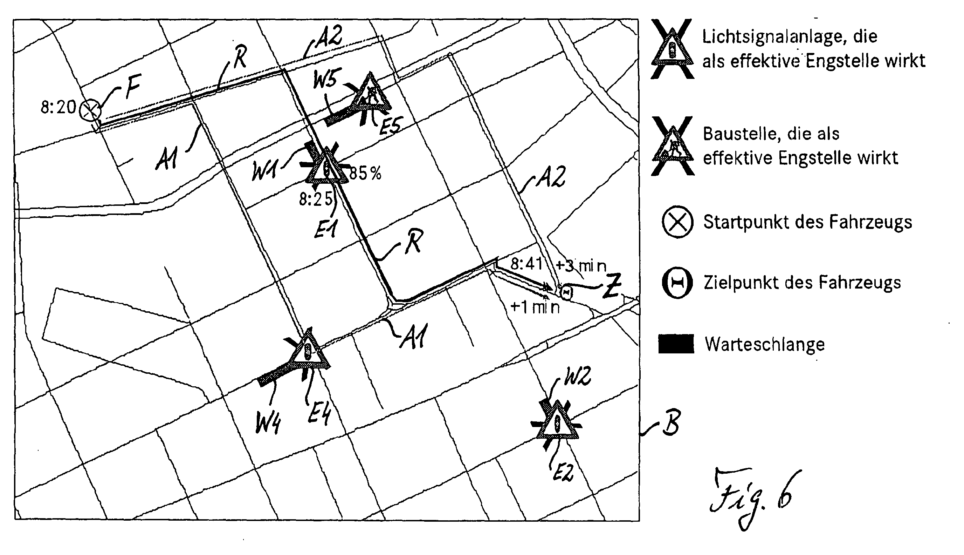

Bei einer in Fig. 6 veranschaulichten Verfahrensvariante werden zusätzlich zu den Ballungsraum-Engstellen E1 bis E5 und den zugehörigen prognostizierten Warteschlangen W1 bis W5 aus der Verkehrsprognose resultierende Routenempfehlungen dargestellt, und zwar eine prognostizierte optimale Route R und eine oder mehrere Alternativrouten, in der Darstellung von Fig. 6 zwei Alternativrouten A1 und A2. Es versteht sich, dass der Routenempfehlung, wie in allen vorliegend betrachteten Fällen, eine Verkehrsprognose zugrunde liegt, welche etwaige Verkehrsstörungsobjekte zeitrichtig, d.h. zum Zeitpunkt des vorausgesagten Eintreffens des Fahrzeugs F, prognostiziert, insbesondere auch die Warteschlangen W1 bis W5. Die Route R erweist sich als optimal, d.h. zeitlich am kürzesten, obwohl sie über die Warteschlange W1 führt. Am Zielpunkt Z ist auf der dargestellten digitalen Straßenkarte der voraussichtliche Ankunftszeitpunkt angegeben. Für die Alternativrouten sind die Reisezeitunterschiede angegeben, d.h. die bezogen auf die optimale Route R zusätzliche Fahrtzeit bis zum Erreichen des Zielpunkts Z. Für die beiden angezeigten Alternativrouten A1, A2, welche die prognostizierten Warteschlangen W1 bis W5 umgehen, sind dies zusätzliche Fahrtdauern von 1 Minute bzw. 3 Minuten.

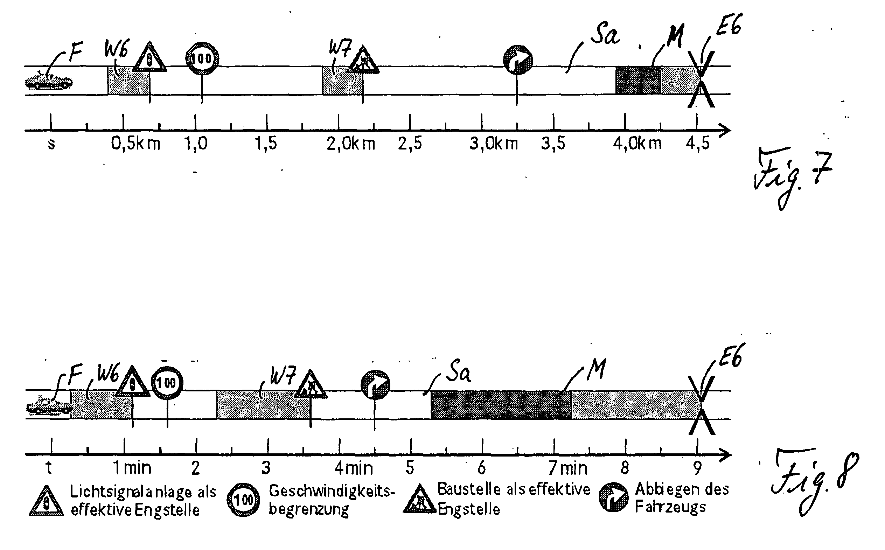

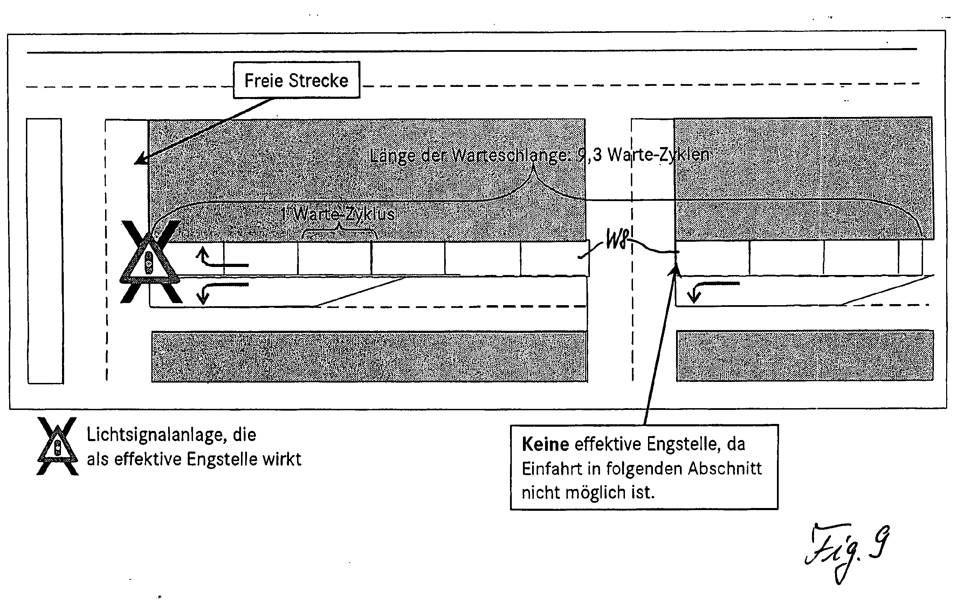

Die Fig. 7 und 8 veranschaulichen alternative Darstellungsmöglichkeiten einer prognostizierten Route als Streckenachsen- bzw. Zeitachsenprofil. Speziell zeigt Fig. 7 eine wiederum auf dem Bildschirm B des Fahrzeugs optisch darstellbare Streckenachse mit einem vor dem Fahrzeug F liegenden Strecken- bzw. Fahrbahnabschnitt Sa und zugeordnetem Maßstab der Streckenlänge s ab dem momentanen Fahrzeugstandort. Alternativ oder zusätzlich kann auf dem fahrzeugseitigen Bildschirm eine Zeitachsendarstellung gemäß Fig. 8 gewählt werden, bei welcher der Streckenabschnitt Sa im Vorfeld des Fahrzeugs F in Zeitlängenform mit zugeordnetem linearem Zeitmaßstabt angezeigt wird, der die prognostizierte Reisezeit angibt.

Wie aus den Fig. 7 und 8 ersichtlich, sind in diesen Darstellungen entlang der Strecken- bzw. Zeitachse an der betreffenden Stelle die prognostizierten Lichtsignalanlagen- bzw. Baustellen-Engstellen als Symbole und vorhergesagte Warteschlangen W6, W7 an diesen als Balken sowie etwaige Geschwindigkeitsbegrenzungen und Abbiegevorgänge in entsprechender Verkehrsschildform wiedergegeben. Je nach Bedarf können andere oder weitere Verkehrsinformationen entlang der Strecken- oder Zeitachse dargestellt werden. Außerdem zeigen die Beispiele der Fig. 7 und 8 einen Fall, bei dem nach dem Abbiegen ein Straßenabschnitt befahren wird, an dem sich eine effektive Engstelle E6 befindet, vor der sich bei Eintreffen des Fahrzeugs F gemäß der zugrundeliegenden Verkehrsprognose ein Muster M dichten Verkehrs gebildet hat.

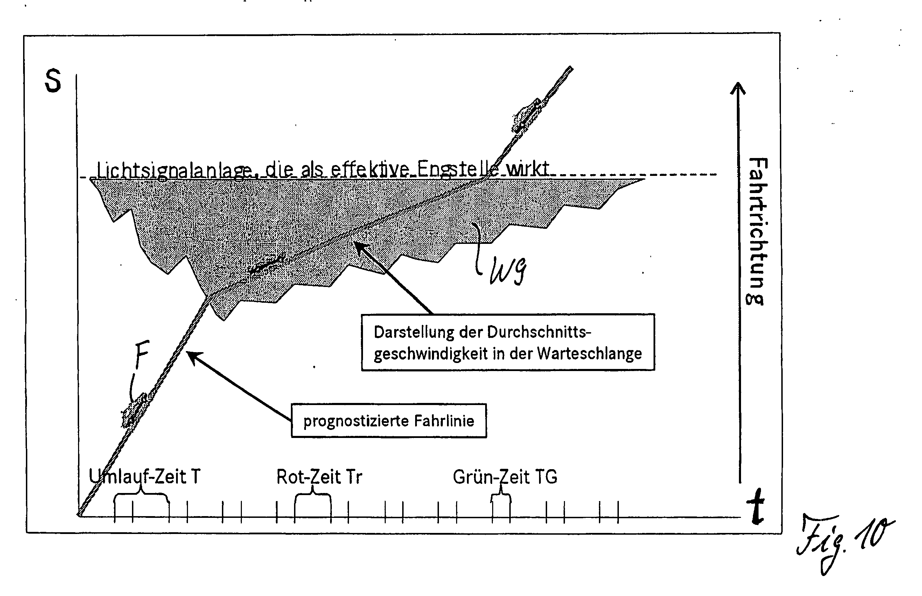

Als weitere Verkehrsvariante kann z.B. auf Fahreranforderung hin eine Detaildarstellung der jeweiligen prognostizierten Warteschlange aktiviert werden, wie sie beispielhaft in Fig. 9 gezeigt ist. Wie daraus ersichtlich, wird hierzu der Fahrbahnbereich stromaufwärts der die Warteschlange verursachenden effektiven Ballungsraum-Engstelle dargestellt und die Warteschlange darin als Balken mit einer der Warteschlangenlänge entsprechenden Balkenlänge eingetragen, vorzugsweise individuell für jede Fahrtrichtungsspur. Als weitere Detailinformation enthält der Warteschlangen-Balkeneintrag, dessen Gesamtlänge in Fig. 9 von einer zugehörigen geschweiften Klammer umfasst wird, eine Unterteilung in Balkenlängeneinheiten je eines Freiphasenzyklus, dort als Warte-Zyklus bezeichnet. Die Länge jedes Warte-Zyklus gibt folglich die während einer Freiphase, wie einer Ampel-Grünphase, vom Fahrzeug in der Warteschlange voraussichtlich zurückgelegte Fahrstrecke an. Im Beispiel von Fig. 9 handelt es sich um eine übergreifende Warteschlange W8 mit einer Länge von insgesamt 9,3 Warte-Zyklen auf einer Rechtsabbiegespur, d.h. ein auf die Warteschlange W8 auffahrendes Fahrzeug kann an der ampelgeregelten Kreuzung voraussichtlich in der zehnten Grünphase nach rechts abbiegen. Auf einer zusätzlich wiedergegebenen Linksabbiegespur liegt keine übergreifende Warteschlange vor. Ersichtlich liefert diese Darstellung dem Fahrzeugführer eine sehr detaillierte Information über eine Warteschlange, auf die er eventuell im weiteren Fahrverlauf trifft.

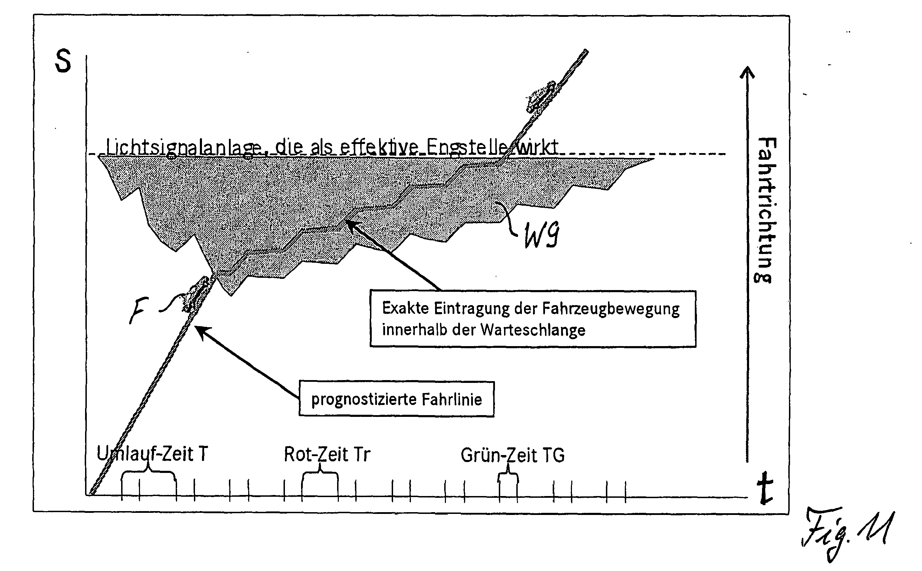

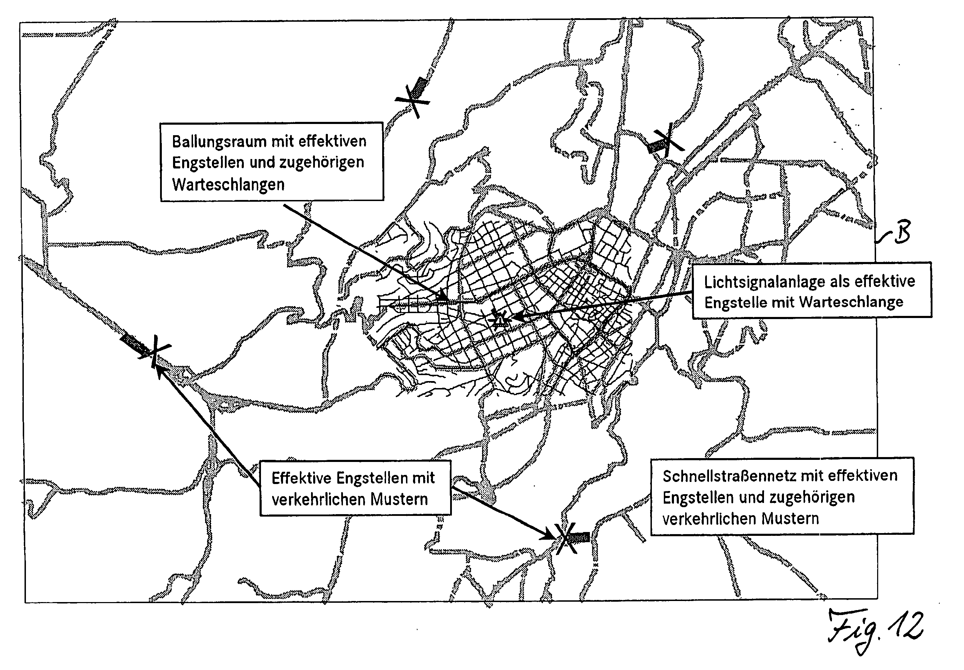

Dies gilt auch für die diagrammatischen Warteschlangendarstellungen, wie sie in den Verfahrensvarianten der Fig. 10 und 11 vorgesehen sind. In diesen Darstellungen wird eine prognostizierte Warteschlange W9 stromaufwärts einer Ballungsraum-Engstelle, wie einer lichtsignalanlagebedingten Engstelle, in ihrer räumlich-zeitlichen Ausdehnung veranschaulicht, d.h. in einem Diagramm mit auf einer Abszisse abgetragenem Zeitverlauf t und auf einer Ordinate in Fahrtrichtung abgetragener Streckenlänge s. Auf der Zeitachse t sind die Grünphasen-Zeitintervalle und die Rotphasen-Zeitintervalle der Lichtsignalanlage markiert, wobei die Summe einer Rotphasen-Zeit und einer Grünphasen-Zeit als Umlauf-Zeit bezeichnet ist, welche die zeitliche Periodenlänge der Lichtsignalanlagenregelung repräsentiert. Zusätzlich ist die prognostizierte Bewegung des Fahrzeugs F als entsprechende prognostizierte Fahrlinie angegeben. Im Beispiel von Fig. 10 wird für die Darstellung der prognostizierten Fahrlinie während des Durchquerens der Warteschlange W9 eine berechnete Durchschnittsgeschwindigkeit des Fahrzeugs in der Warteschlange zugrundegelegt, während im Fall von Fig. 11 die prognostizierte Fahrzeugbewegung innerhalb der Warteschlange W9 in ihrem exakten Strecken- und Zeitverlauf wiedergegeben wird.

In einer weiteren vorteilhaften Ausführungsform umfasst das erfindungsgemäße Verfahren sowohl eine Verkehrsprognose von effektiven Ballungsraum-Engstellen und an diesen entstehenden Warteschlangen in Ballungsraumgebieten eines betrachteten Wegenetzes als auch von effektiven Schnellstraßen-Engstellen und an diesen entstehenden Mustern dichten Verkehrs in Schnellstraßengebieten des Wegenetzes. Die ermittelten Ballungsraum-Engstellen mit zugehörigen Warteschlangen und die Schnellstraßen-Engstellen mit zugehörigen Mustern dichten Verkehrs werden dann kombiniert auf einer digitalen Straßenkarte am Bildschirm B im Fahrzeug dargestellt. Fig. 12 zeigt beispielhaft eine derartige Bildschirmdarstellung mit einer Lichtsignalanlagen-Engstelle in einem Ballungsraumgebiet und vier effektiven Schnellstraßen-Engstellen in einem Schnellstraßennetzgebiet. Die zugehörigen Warteschlangen bzw. Muster dichten Verkehrs sind jeweils wiederum mit Balken entsprechender Länge wiedergegeben. Zusätzlich können auch in diesem Ausführungsbeispiel weitere Detailinformationen zu den einzelnen Engstellen je nach Bedarf angezeigt werden, wie oben zu den anderen gezeigten Beispielen erläutert.

Insgesamt zeigen die beschriebenen Ausführungsbeispiele, dass das erfindungsgemäße Verfahren eine komfortable und realitätsnahe Wiedergabe von prognostizierten Verkehrsstörungsmustern in Ballungsräumen und optional zusätzlich in Schnellstraßennetzgebieten auf der Basis geeigneter herkömmlicher Verkehrsprognoseverfahren ermöglicht.

## Patentansprüche

1. Verfahren zur fahrzeugseitigen Anzeige von Verkehrsinformationen, bei dem
- die Verkehrsinformationen fahrzeugseitig ermittelt und/oder fahrzeugextern ermittelt und zum Fahrzeug übertragen und fahrzeugseitig angezeigt werden,
**dadurch gekennzeichnet, dass**
- die Ermittlung der anzuzeigenden Verkehrsinformationen eine Ermittlung von effektiven Ballungsraum-Engstellen (E1 bis E5) und von zugehörigen Warteschlangen-Verkehrsmustern eines betrachteten Ballungsraum-Verkehrswegenetzes umfasst und
- die ermittelten effektiven Ballungsraum-Engstellen und Warteschlangen-Verkehrsmuster ortsaufgelöst fahrzeugseitig angezeigt werden.

2. Verfahren nach Anspruch 1, weiter
**dadurch gekennzeichnet, dass** die Ermittlung und Anzeige der effektiven Ballungsraum-Engstellen und/oder der Warteschlangen-Verkehrsmuster fahrtrichtungsselektiv erfolgt.

3. Verfahren nach Anspruch 1 oder 2, weiter
**dadurch gekennzeichnet, dass** die effektiven Ballungsraum-Engstellen und Warteschlangen-Verkehrsmuster in Symbolform auf einer digitalen Wegenetzkarte auf einem fahrzeugseitigen Bildschirm (B) sowie automatisch oder auf Nutzeranforderung hin zugehörige Detailinformationen angezeigt werden.

4. Verfahren nach Anspruch 3, weiter
**dadurch gekennzeichnet, dass** die angezeigten Detailinformationen solche über die Länge prognostizierter Warteschlangen-Verkehrsmuster, über voraussichtliche Warteschlangen-Wartezeiten, Anzahl von Freiphasen, den Zeitpunkt des Auftretens und der Auflösung der Warteschlangen-Verkehrsmuster, deren Ereigniswahrscheinlichkeit, prognostizierte Reisezeiten, warteschlangenbedingte Reisezeitverluste und/oder Fahrzeugankunftszeiten für das jeweilige Warteschlangen-Verkehrsmuster umfassen.

5. Verfahren nach einem der Ansprüche 1 bis 4, weiter
**dadurch gekennzeichnet, dass** die Warteschlangen-Verkehrsmuster in ihrer Ortsausdehnung zusammen mit der zugehörigen Anzahl zu wartender Freiphasenzyklen und/oder der zugehörigen Wartezeit dargestellt werden.

6. Verfahren nach einem der Ansprüche 1 bis 5, weiter
**dadurch gekennzeichnet, dass** eine prognostizierte optimale Route und eine oder mehrere Alternativrouten vom momentanen Fahrzeugstandort zu einem vorgegebenen Zielort zusammen mit zugehörigen Ankunftszeiten und Reisezeitdifferenzen dargestellt werden.

7. Verfahren nach einem der Ansprüche 1 bis 6, weiter
**dadurch gekennzeichnet, dass**
- die Ermittlung der anzuzeigenden Verkehrsinformationen zusätzlich eine Ermittlung von effektiven Engstellen eines Schnellstraßennetzes umfasst, das ebenso wie das Ballungsraum-Wegenetz einen Teil eines betrachteten Verkehrswegenetzes bildet, und
- auch die ermittelten effektiven Schnellstraßen-Engstellen fahrzeugseitig zusammen mit zugehörigen ermittelten Mustern dichten Verkehrs ortsaufgelöst angezeigt werden.

## Claims

1. Method for displaying traffic information in a vehicle, with which
- the traffic information is determined at the vehicle and/or is determined externally to the vehicle and is transmitted to the vehicle and displayed at the vehicle, **characterized in that**
- the determination of the traffic information which is to be displayed comprises determining effective conurbation bottlenecks (E1 to E5) and associated queuing traffic patterns of a conurbation transport route network under consideration, and
- the determined, effective conurbation bottlenecks and queuing traffic patterns which are determined are displayed at the vehicle with resolution at the local level.

2. Method according to Claim 1, further **characterized in that** the effective conurbation bottlenecks and/or the queuing traffic patterns are determined and displayed selectively with respect to the direction of travel.

3. Method according to Claim 1 or 2, further **characterized in that** the effective conurbation bottlenecks and queuing traffic patterns are displayed in symbol form on a digital route network map on a screen (B) in the vehicle, and associated detailed information is displayed automatically or on request by a user.

4. Method according to Claim 3, further **characterized in that** the displayed detailed information comprises information about the length of projected queuing traffic patterns, about predicted queuing waiting times, number of free phases, the time when the queuing traffic patterns occur and break up, their event probability, predicted travel times, queuing-related travel time losses and/or vehicle arrival times for the respective queuing traffic pattern.

5. Method according to one of Claim 1 to 4, further **characterized in that** the queuing traffic patterns are represented in their local extent together with the associated number of free phase cycles to be waited for and/or the associated waiting time.

6. Method according to one of Claims 1 to 5, further **characterized in that** a predicted optimum route and one or more alternative routes from the current location of the vehicle to a predefined destination are represented together with associated arrival times and differences in travel time.

7. Method according to one of Claims 1 to 6, further **characterized in that**
- the determination of the traffic information to be displayed additionally comprises determination of effective bottlenecks of a high-speed route network which, like the conurbation route network, forms part of a transport route network under consideration, and
- the determined, effective high-speed bottlenecks are also displayed at the vehicle together with associated determined patterns of dense traffic with resolution at the local level.

## Revendications

1. Procédé pour afficher des informations de trafic au niveau d'un véhicule, avec lequel
- les informations de trafic sont déterminées au niveau du véhicule et/ou sont déterminées à l'extérieur du véhicule et sont transmises au véhicule puis affichées au niveau du véhicule,
**caractérisé en ce que**
- la détermination des informations de trafic à afficher comprend une détermination de points d'engorgement effectifs de la zone urbaine (E1 à E5) et des modèles de trafic de file d'attente correspondants d'un réseau de voies de circulation d'une zone urbaine considérée et
- les points d'engorgement effectifs de la zone urbaine et les modèles de trafic de file d'attente sont affichés au niveau du véhicule avec indication de l'emplacement.

2. Procédé selon la revendication 1, également **caractérisé en ce que** la détermination et l'affichage des points d'engorgement effectifs de la zone urbaine et/ou des modèles de trafic de file d'attente s'effectue avec sélection du sens du déplacement.

3. Procédé selon la revendication 1 ou 2, également **caractérisé en ce que** les points d'engorgement effectifs de la zone urbaine et les modèles de trafic de file d'attente sont affichés sous la forme de symboles sur une carte numérique du réseau routier sur un écran (B) au niveau du véhicule ainsi que des informations détaillées associées qui s'affichent automatiquement ou sur demande de l'utilisateur.

4. Procédé selon la revendication 3, également **caractérisé en ce que** les informations détaillées affichées comprennent des informations sur la longueur prévisionnelle du modèle de trafic de file d'attente, sur la durée probable de la file d'attente, le nombre de phases de dégagement, le moment où le modèle de trafic de file d'attente se produit et le moment où il se dissout, la probabilité pour qu'il se produise, les temps de trajet prévisionnels, les pertes de temps de trajet liés aux files d'attente et/ou les heures d'arrivée du véhicule pour le modèle de trafic de file d'attente correspondant.

5. Procédé selon l'une des revendications 1 à 4, également **caractérisé en ce que** les modèles de trafic de file d'attente sont représentés dans leur étendue locale avec le nombre correspondant de cycles de phase de dégagement attendus et/ou le temps d'attente correspondant.

6. Procédé selon l'une des revendications 1 à 5, également **caractérisé en ce qu'**un trajet optimal prévisionnel et un ou plusieurs trajets alternatifs entre l'emplacement momentané du véhicule et un emplacement de destination prédéfini sont représentés conjointement avec les temps d'arrivée correspondants et les différences de temps de déplacement.

7. Procédé selon l'une des revendications 1 à 6, également **caractérisé en ce que**
- la détermination des informations de trafic à afficher comprend en plus la détermination des points d'engorgement effectifs d'un réseau de voies rapides qui, tout comme le réseau de voies de circulation de la zone urbaine, représente une partir du réseau routier considéré et
- les points d'engorgement effectifs déterminés des voies rapides sont eux aussi affichés au niveau du véhicule avec indication de l'emplacement conjointement avec les modèles correspondants déterminées de trafic dense.
